# EUROPEAN PATENT APPLICATION

(11) **EP 0 822 111 A2**
(43) Date of publication of application: **04.02.1998**
(21) Application number: 97113349.1
(22) Date of filing: 01.08.1997
(51) Int. Cl.: B60K 17/348, B60K 17/342

(54) **Rotation transmitting mechanism and automotive transfer using the same**

(30) Priority: 02.08.1996 JP 205046/96
(71) Applicant: Mimura, Kenji, Yokohama-shi, Kanagawa 241 (JP)
(72) Inventor: Mimura, Kenji, Yokohama-shi, Kanagawa 241 (JP)
(74) Representative: TER MEER STEINMEISTER & PARTNER GbR

(57) **Abstract**

The present invention provides a rotation transmitting mechanism capable of transmitting a power in a constantly stabilized manner irrespective of a low speed rotation or a high speed rotation, and a transfer for automobiles using the rotation transmitting mechanism. In the present invention, when a rotational difference occurs between the casing 1 and the shaft 3, the rollers are allowed to roll while being in contact with pressure plates 5 on one hand which rotate together with the casing 1 and in contact with pressure plates 6 on the other which rotate together with the shaft 3, while simultaneously the pressure rotor 9 rotates within the viscous fluid 6 so that the pressure of the viscous fluid 6 presses the piston disk 4 toward the rollers 7. This will result in a generation of a frictional force corresponding to a pressing force of the piston disk between the rollers 7 and the pressure plates 5, 6, the pressing force serving as a resistance for the transmission of the power. At that time, the rollers generate a sliding friction in rolling motion, thus ensuring at all times a stable frictional force by a dynamic friction without generating any static frictional force.

## Description

### BACKGROUND OF THE INVENTION

### 1. Field of the Invention

The present invention relates to a rotation transmitting mechanism effective for various mechanical apparatuses and to an automotive transfer using the rotation transmitting mechanism.

### 2. Description of the Prior Art

Hitherto known as this type of rotation transmitting mechanism is one having a multiplicity of first clutch disks fixed to a shaft coupled to the exterior and a multiplicity of second clutch disks connected to a casing, the first and second clutch disks alternately confronting one another, in which when a relative rotational difference occurs between the shaft and the casing, the clutch disks are pressed by the hydraulic pump or the like located on one end side of the clutch disks, to generate a frictional force for the transmission of a power. This rotation transmitting mechanism can be used to couple the automobile front and rear wheel drive shafts to thereby transmit a power to the coupled drive wheels in case the main driving side drive wheels are in idle, so that an easy escape is ensured even though one of the front wheels or the rear wheels has run up onto a surface of road having a lower frictional coefficient.

For the mechanism like the multiple disk clutch making use of a sliding friction for the power transmission, however, it is extremely difficult to always keep the frictional force constant under half-connection. In this instance, in the low-speed rotation, there will occur a so-called stick slip in which the clutch disks generate in cooperation static friction and dynamic friction in an intermittent manner, whereas in the high-speed rotation, the friction coefficient may vary depending on a change in temperature, so that a stable power transmission is not ensured. Another problem also arose that the low-speed rotation causes a noise or vibration due to stick slip, which may adversely affect the traveling performance.

### SUMMARY OF THE INVENTION

The present invention was conceived in view of the above problems. It is therefore the object of the present invention to provide a rotation transmitting mechanism capable of always and stably transmitting a power irrespective of rotational speed ranging from low speed rotation to high speed rotation, and a transfer for automobiles using the rotation transmitting mechanism.

According to an aspect of the present invention, in order to achieve the above object, there is provided a rotation transmitting mechanism having a pair of rotary elements arranged coaxially with each other, a movable member engaged with one rotary element in an axially displaceable manner and rotating together with said one rotary element, pressing means for pressing said movable member toward its one end in the axial direction, and rotational force transmission means for transmitting rotational forces of said rotary elements by use of pressing force of said pressing means, the improvement wherein said rotational force transmission means comprise a rotational member which rotates together with said one rotary element, a rotational member which rotates together with the other rotary element, a plurality of rollers arranged spaced apart from one another in the circumferential direction of the rotary elements between axially confronting surfaces of said rotational members, said plurality of rollers being allowed, when a rotational difference occurs between said rotary elements, to roll while being in contact with said axially confronting surfaces of said rotational members, and a roller retainer for retaining said rollers in such a manner that the rolling axes of said rollers are inclined so as to form a predetermined angle relative to a plane containing rotational axes of said rotary elements. As a result, when a rotational difference occurs between the two rotary elements, the rollers are allowed to roll while being in contact with both a surface rotating together with one rotary element and a surface rotating together with the other rotary element. At that time, the rollers move along rotational paths of the rotary elements while being restricted by the roller retainer from rolling in the direction inclined by a predetermined angle relative to the rotational paths of the rotary elements, so that when the movable member is pressed by the pressing means toward the rollers, between the rollers and the contact surfaces therewith there is generated a friction force corresponding to the pressing force of the movable member, the frictional force resulting in a resistance for the transmission of power. In this instance, the rollers generate a sliding friction while rolling, thus ensuring an acquisition of constantly stabilized frictional force. Thus, according to the present invention, it is possible to transmit a power in a constantly stabilized manner irrespective of rotational speed ranging from a lower speed rotation to a higher speed rotation, and to eliminate the influence of a change in temperature, thus ensuring a secure prevention of occurrence of noise or vibration at a lower speed rotation by the stick slip, which would be very advantageous for use in e.g. the power transmission line of the automobile. It would also be possible to obtain a desired power transmission force since the magnitude of the frictional force can be varied by setting optionally the magnitude of the inclination angle of the rollers.

In the above construction, said rollers are provided in a freely inclined manner so that a first angle is different from a second angle, said first angle being an angle formed, when a rotational difference of said rotary elements occurs in one rotational direction, between the rolling axes of said rollers and a plane containing the rotational axes of said rotary elements, said second angle being an angle formed, when said rotary elements generate a rotational difference in the other rotational direction, between the rolling axes of said rollers and a plane containing the rotational axes of said rotary elements, whereby the inclination angles of the rollers in the rotational directions are varied, making it possible to increase the power transmission force when the rotational difference between the rotary elements occurs in one rotational direction, but to reduce the power transmission force when it occurs in the other rotational direction.

In the above construction, said pressing means comprise a viscous fluid arranged on the other end of said movable member, and a pressing member for imparting to said viscous fluid a pressure in the axial direction of said movable member by a rotational force of said one rotary element, whereby a power of one rotary element is transmitted to the other rotary element at a magnitude corresponding to the rotational speed difference. Thus, in the automobile employing a rotation transmitting mechanism by way of which the front wheel side drive line is coupled to the rear wheel side drive line, even though the drive side wheels are in idle, the driving force can be transmitted to the other wheel side.

In the above embodiment, said pressing means comprise a pressing member arranged on the other end side of said movable member, driving means capable of displacing said pressing member in the axial direction of said movable member, and control means for optionally varying the pressing force imparted by said drive means to said movable member, whereby it is possible to optionally vary the power transmission force of the rotary elements. Thus, for instance, in an automobile employing the rotation transmitting mechanism by way of which the front wheel side drive line is transmitted to the rear wheel side drive line, it becomes possible to optionally change the driving torque distributing ratios imparted to the front and rear wheels in response to the state of travel such as velocities of the wheels or the acceleration in the longitudinal and transverse directions of the wheels, thereby ensuring a proper torque distribution to the wheels at the time of acceleration, deceleration or turning.

In the above construction, the roller retainer may have a hole for receiving a plurality of rollers, thereby allowing the rollers within the hole to individually roll to generate a more stable frictional force.

### BRIEF DESCRIPTION OF THE DRAWINGS

Fig. 1 is a side sectional view of a rotation transmitting mechanism showing a first embodiment of the present invention;
Fig. 2 is a sectional view taken along a line A-A of Fig. 1 and viewed from the direction of arrow;
Fig. 3 is a sectional view taken along a line B-B of Fig. 1 and viewed from the direction of arrow;
Fig. 4 is an exploded perspective view of the rotation transmitting mechanism;
Figs. 5A and 5B are enlarged views of a principal part of the rotation transmitting mechanism;
Fig. 6 is an enlarged sectional view of a principal part of the rotation transmitting mechanism;
Fig. 7 is an explanatory view showing a principle of generation of a frictional force;
Fig. 8 is an explanatory view showing a principle of generation of a frictional force;
Fig. 9 is a sectional view of a rotation transmitting mechanism which is a variant of the first embodiment;
Fig. 10 is a front elevational view of a wire ring;
Figs. 11A and 11B are front elevational views of rollers and a cage, each showing a variant of the first embodiment;
Fig. 12 is a front elevational view of a principal part showing a varient of the first embodiment;
Figs. 13A and 13B are explanatory views of action of the rollers;
Fig. 14 is a side sectional view of a transfer using the rotation transmitting mechanism, showing a second embodiment of the present invention; and
Fig. 15 is a schematic view showing a power transmission line of an automobile.

### DESCRIPTION OF THE PREFERRED EMBODIMENTS

The above and other objects, aspects, features and advantages of the present invention will become more apparent from the following description in conjunction with the accompanying drawings, in which:

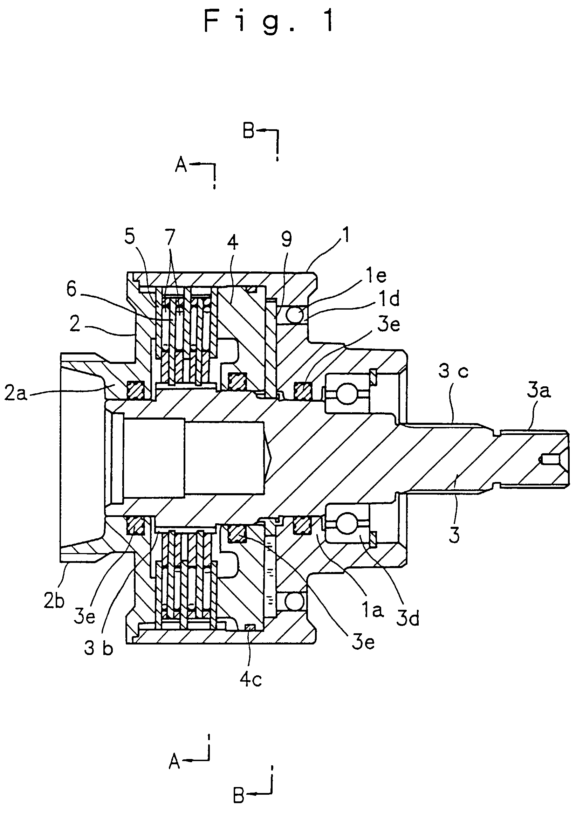

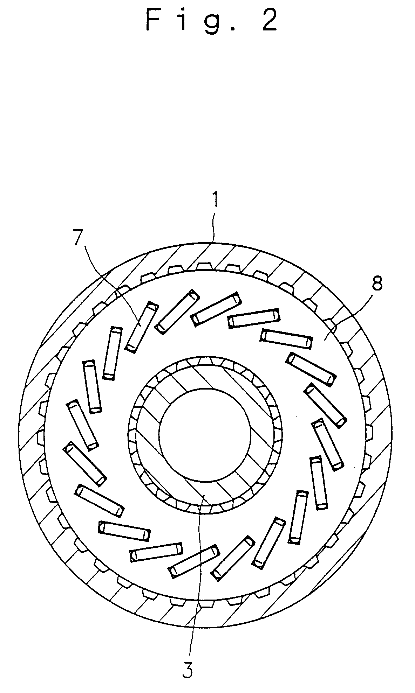

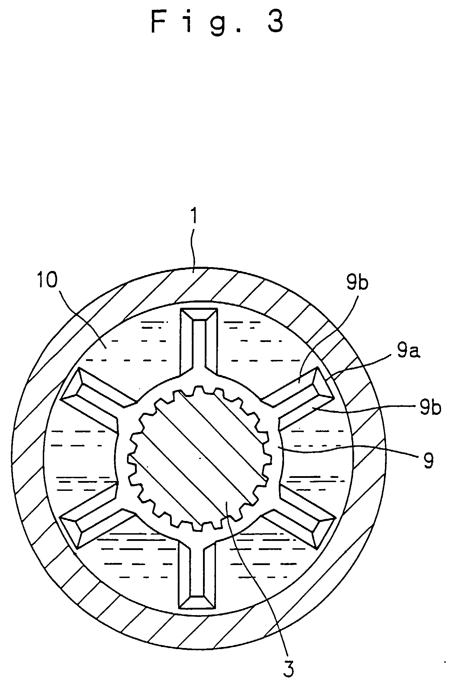

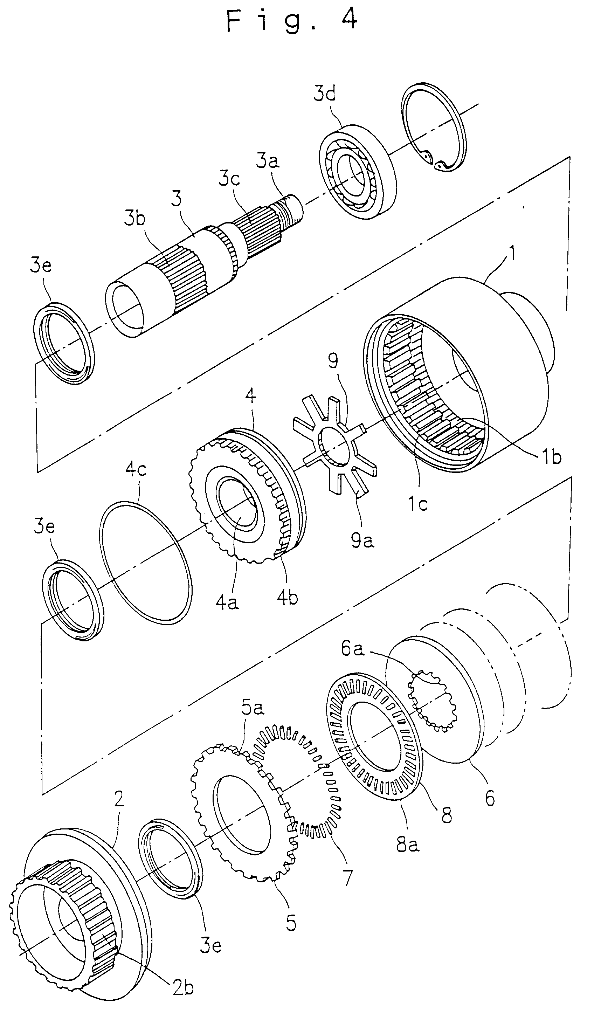

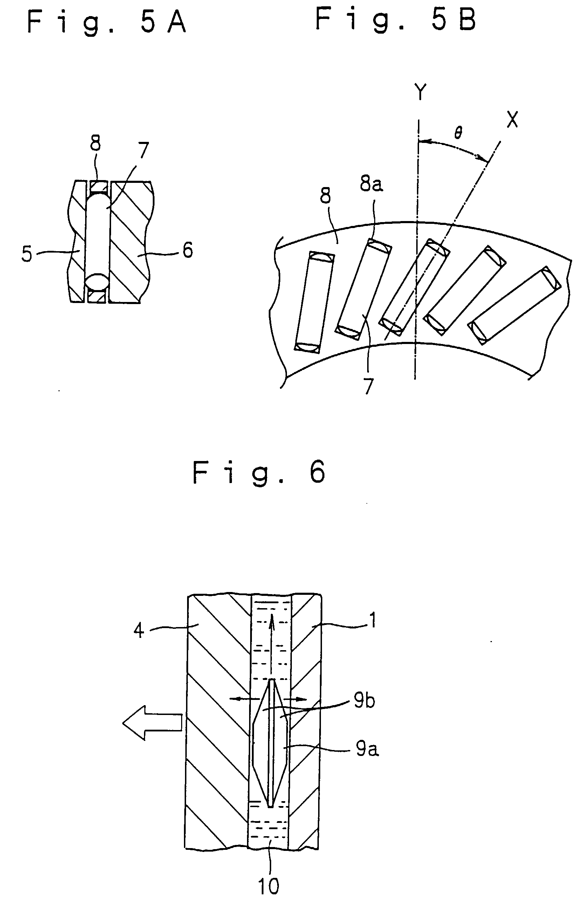

Figs. 1 to 8 illustrate a first embodiment of the present invention. Fig. 1 is a side sectional view of a rotation transmitting mechanism; Fig. 2 is a sectional view taken along a line A-A of Fig. 1 and viewed from the direction of arrow; Fig. 3 is a sectional view taken along a line B-B of Fig. 1 and viewed from the direction of arrow; Fig. 4 is an exploded perspective view of the rotation transmitting mechanism; Figs. 5A and 5B are enlarged views of the major part thereof; and Fig. 6 is an enlarged sectional view of the major part thereof.

The rotation transmitting mechanism comprises a casing 1, a casing cover 2 for closing one end of the casing 1, a shaft 3 arranged coaxially with the casing 1, a piston disk 4 connected axially displaceably to the casing 1, a plurality of pressure plates 5, 6 arranged on one end surface side of the piston disk 4 so as to alternately confront one another in the axial direction of the casing 1, a multiplicity of rollers 7 arranged circumferentially between the pressure plates 5 and 6, a plurality of cages 8 for retaining the rollers 7 in a spaced apart relationship, and a pressure rotor 9 arranged on the other end surface side of the piston disk 4 and joined axially displaceably to the shaft 3, with the pressure rotor 9 having a viscous fluid 10 filled therearound. The casing 1 and the casing cover 2 constitute one rotary element, the shaft 3, the piston disk 4, the pressure plates 5, 6, the rollers 7, the cage 8 and the pressure rotor 9 serving respectively as the other rotary element, a movable member, rotational member, rolling elements, a roller retainer and a pressing member. Pressing means are comprised of the pressure rotor 9 and the viscous fluid 10, with rotational force transmission means being comprised of the pressure plates 5, 6, the rollers 7 and the cage 8.

The casing 1 is in the form of a cylinder having one open end and the other end provided at its center with a bearing 1a supporting the shaft 3. On the inner peripheral surface of the casing 1 there are formed key grooves 1b and 1c with which the piston disk 4 and the pressure plates 5 on one hand axially displaceably engage. The casing 1 includes a filling hole 1d into the interior of which the viscous fluid 10 is filled, the filling hole 1d being intended to be blocked by a ball 1e after filling of the viscous fluid 10. In this embodiment, at least two filling holes 1d are provided for injection and for air venting.

The casing cover 2 is in the form of a disk so as to block one end of the casing 1 and is provided at its center with a bearing 2a for supporting the shaft 3. The external surface of the casing cover 2 is provided with a splined connection 2b intended to be connected to one driving system not shown.

The shaft 3 has at its one end a connection 3a intended to be connected to the one driving system not shown, with the peripheral surface being at two locations a spline 3b with which pressure plates 6 on the other axially displaceably engage and a spline 3c with which the pressure rotor 9 axially displaceably engage. The shaft 3 is supported by way of a bearing 3d on the casing 1, with an oil seal 3e serving to seal gaps which may be defined between the shaft 3 and the bearing 1a of the casing 1, the bearing 2a of the casing cover 2 and the piston disk 4.

The piston disk 4 is shaped into a disk having at its center a hole 4a through which the shaft 3 rotatably extends. The outer peripheral surface of the piston disk 4 is formed with an axially extending spline 4b with which the key groove 1c of the casing 1 is enaged to thereby allow the piston disk 4 to be axially displaceably mounted on the casing 1. An O-ring 4c is provided to seal a gap defined between the outer peripheral surface of the piston disk 4 and the inner peripheral surface of the casing 1.

The pressure plates 5, 6 are each of an annular shape, with the outer periphery of the pressure plate 5 on one hand being formed with a spline 5a which is engaged with the key groove 1b of the casing 1, the inner periphery of the pressure plate 6 on the other being formed with a key groove 6a which is engaged with the spline 3b of the shaft 3.

Each roller 7 is in the form of a uniformly extending cylinder and is interposed between the pressure plates 5, 6 associated therewith.

Each cage 8 includes a multiplicity of holes 8a for accommodating rollers 7 in a freely rolling manner, with each hole 8a being formed so that as shown in Fig. 5B a rolling axis X of each roller 7 is inclined by an angle of theta with respect to a plane containing the rotational axis of the casing 1, that is, a line Y extending from the rotational center of the casing 1.

The pressure rotor 9 has a multiplicity of radially extending protrusions 9a, with the inner peripheral surface of the centrally formed hole being provided with a key groove 9b with which the spline 3c of the shaft 3 engages. Each protrusion 9a has as shown in Fig. 6 an inclined surface which is inclined relative to the circumferential direction of the pressure rotor 9.

The viscous fluid 10 may be for example silicone oil and is filled around the pressure rotor 9, that is, within a sealed region defined between the other end surface of the piston disk 4 and the inner surace of the casing 1.

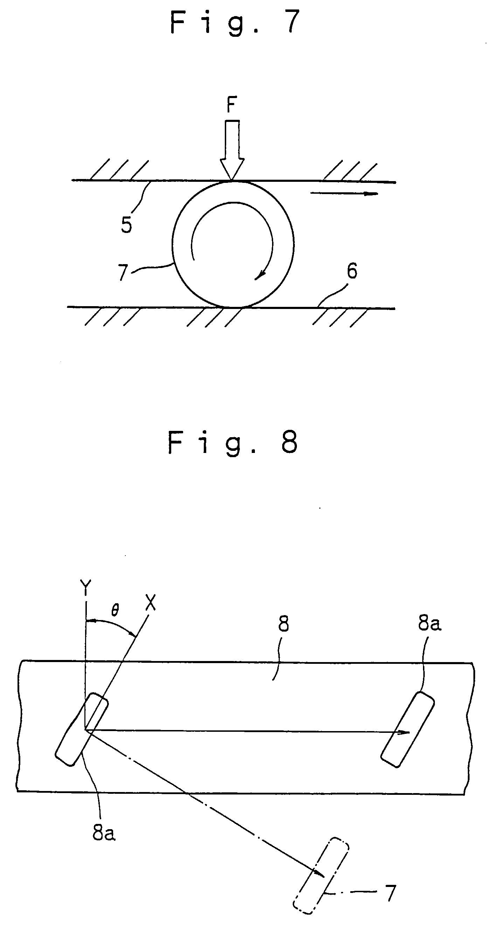

In use of the thus constructed rotation transmitting mechanism, a rotational difference occurring between the casing 1 and the shaft 3 will allow the piston disk 4 and the pressure plate 5 on one hand to rotate together with the casing 1, and simultaneously allow the pressure plate 6 on the other and the pressure rotor 9 to rotate together with the shaft 3. At that time, due to the rotation of the pressure rotor 9 within the viscous fluid 6 as shown in Fig. 6, the inclined surface 9c of the protrusions 9a of the pressure rotors9 will impart to the viscous fluid 6 a pressure in the axial direction of the casing 1, which pressure axially displaces the piston disk, with the result that the pressure plates 5 and 6 are pressed by the piston disk 4. This will allow the rollers 7 to roll while being in pressure contact with the pressure plates 5, 6 as shown in Fig. 7, which is followed by the rotation of the cage 8. At that time, the rollers 7 are moved along rotational paths (in the direction indicated by a solid line) of the pressure plates 5, 6 while being restricted from rolling in the direction (indicated by a chain dotted line) inclined by an angle theta relative to the rotational paths of the pressure plates 5, 6 as shown in Fig. 8, and hence between the rollers 7 and the pressure plates 5, 6 there occurs a frictional force corresponding to a pressing force F of the piston disk 4, the frictional force resulting in a resistance for the power transmission between the casing 1 and the shaft 3. In this instance, a constantly stabilized frictional force is obtained since the rollers 7 generate a sliding friction while rolling. A pressing force F by the piston disk 4 will become larger accordingly as a rate at which the protrusions 9a of the pressure rotor 9 shear the viscous fluid 6, that is, a rotational difference between the case 1 and the shaft 3 is increased.

In this manner, according to the rotation transmitting mechanism of this embodiment, a multiplicity of rollers 7 whose rolling axes are inclined by a predetermined angle relative to a plane containing a rotational axis of the casing 1 are allowed to roll while being in pressure contact with the pressure plates 5, 6 by the pressing force of the piston disk 4 which is axially displaceable, to generate a differential restricting force by a sliding friction accompanied by rolling of the rollers 7, thereby achieving a constantly stabilized power transmission without causing a stick slip at a low rotational speed, as well as a secure prevention of occurrence of noise and vibration. It is also possible to vary the magnitude of the frictional force by arbitrarily setting the inclination angle theta of the rollers 7, thus ensuring an acquisition of a desired differential restricting force.

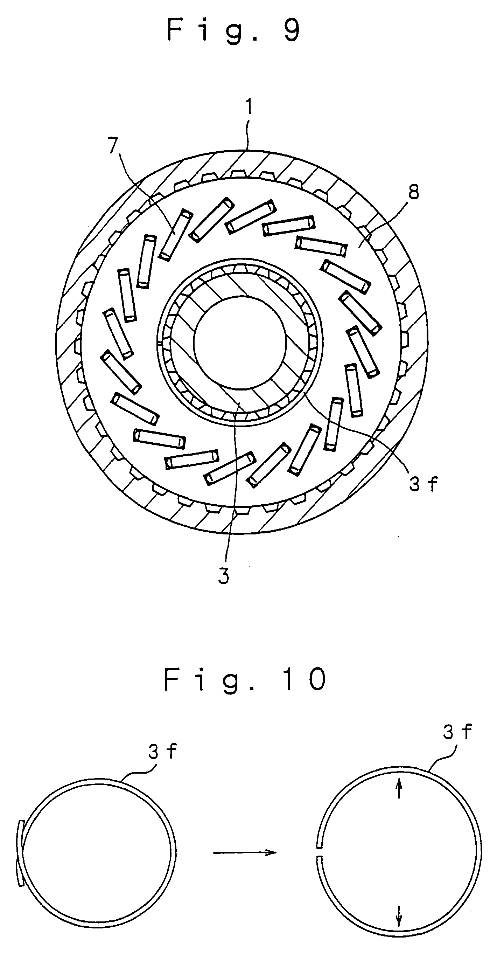

Although in the above embodiment the pressure rotor 9 is rotated within the viscous fluid 6 do that the pressure of the viscous fluid 6 presses the piston disk 4, it would also be possible to employ as pressing means for the piston disk 4 the other structure such as a pumping mechanism having a separate fluid passage. Furthermore, as shown in Figs. 9 and 10, a wire ring 3f may be interposed between the outer peripheral surface of the shaft 3 and the inner peripheral surface of the cage 8, to thereby preventing a direct contact of the inner peripheral surface of the cage with the spline 3b of the shaft 3, resulting in a reduction of friction which may occur on the inner peripheral surface of the cage 8. In this instance, a gap may be provided between the outer peripheral surface of the cage 8 and the key groove 1c of the casing 1 so as to reduce the friction on the outer peripheral surface of the cage 8 as well. The wire ring 3f is made of a metal rod such as a piano wire having an elasticity which is annularly bent with a diameter smaller than the external diameter of the shaft 3. That is, the wire ring 3f is bent in such a manner that its external diameter is enlarged upon mounting onto the external periphery of the shaft 3.

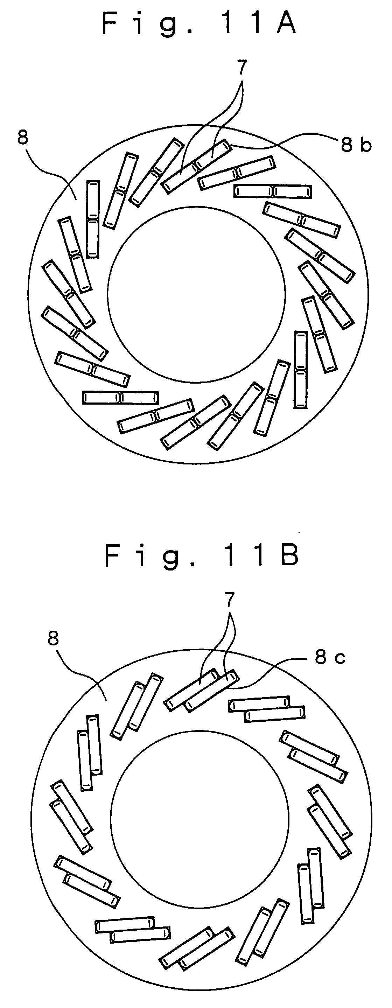

Referring to Figs. 11A and 11B there is depicted a variant of the above embodiment, in which two rollers 7 are received in each of the holes of the cage 8. More specifically, the cage 8 shown in Fig. 11A has a hole 8b for receiving two rollers 7 which are axially arranged, whereas the cage 8 shown in Fig. 11B has a hole 8c for receiving two rollers 7 which are radially arranged. Such arrangements allow the rollers 7 within the hole 8b or 8c to individually roll, to thereby ensure a generation of a more stabilized frictional force as well as an acquisition of a frictional force arising from the contact of the rollers 7 with each other.

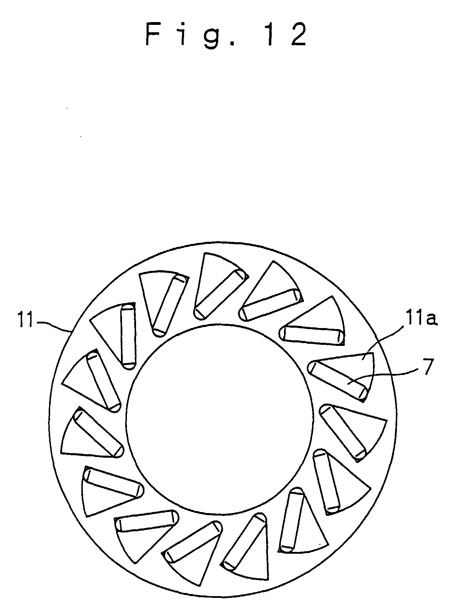

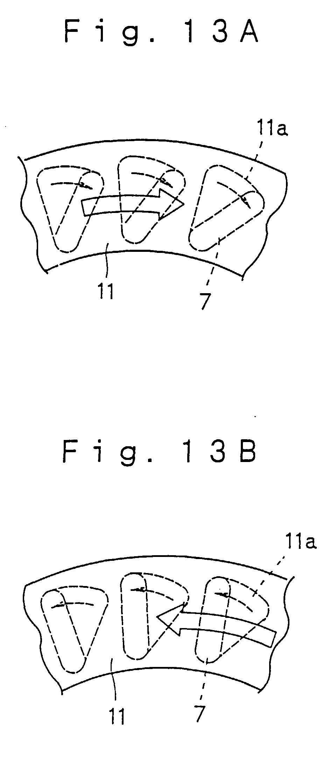

Referring to Figs. 12 and 13 there is depicted another variant of the above embodiment, in which the rollers 7 are provided in a freely inclined manner. The cage 11 shown has a multiplicity of holes 11a for receiving the rollers 7 in a freely rolling manner, with each hole 11a being shaped into a fan starting from one end of the roller 7 and having two edges which extend from the one end and are differently inclined so as to form different angles relative to a plane containing the rotational axis of the device body.

In this construction, if a rotational difference between the casing 1 and the shaft 3 occurs in one rotational direction, the rollers 7 as shown in Fig. 13A roll with an inclination toward one end side of the cage 11, whereas if a rotational difference between the casing 1 and the shaft 3 occurs in the other rotational direction, then the rollers 7 as shown in Fig. 13B roll with an inclination toward the other end side of the cage 11. At that time, since the inclination angles of the rollers 7 differ depending on the rotational direction, different frictional force will be generated in response to the respective inclination angles. It is thus possible to increase the power transmission force when the rotational difference between the casing 1 and the shaft 3 occurs in one rotational direction, but to reduce the power transmission force when it occurs in the other rotational direction, which will be advantageous to a mechanism requiring such an operation.

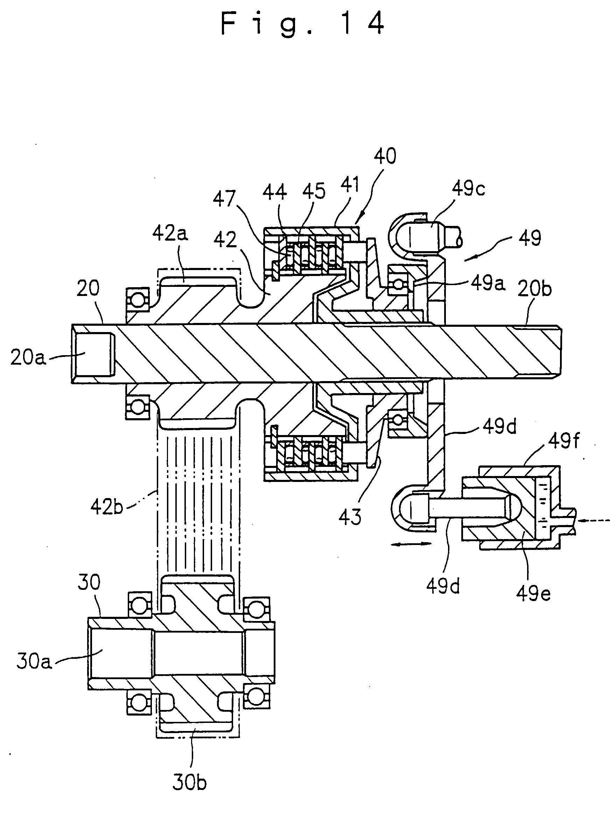

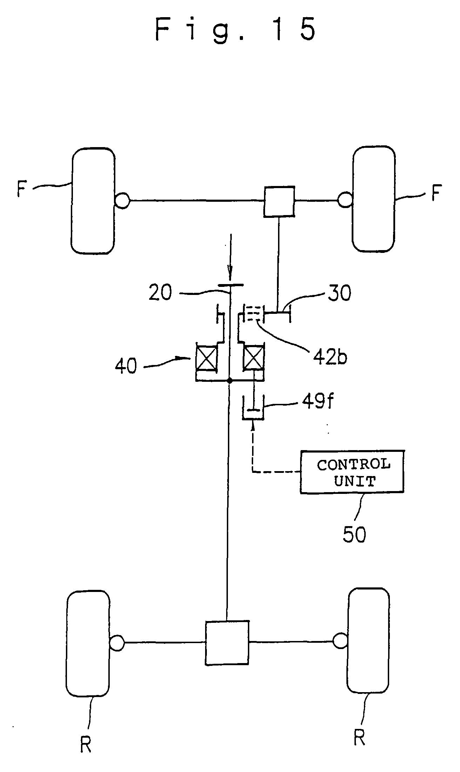

Reference is now be made to Figs. 14 and 15. Fig. 14 is a side sectional view of a transfer employing the rotation transmitting mechanism, and Fig. 15 is a schematic view showing a power transmission line of an automobile.

The transfer comprises a main shaft 20 for transmitting an engine driving force to the rear wheel side of the automobile, a transfer shaft 30 connected to a drive line on the automobile front wheel side, a rotation transmitting mechanism 40 for transmitting a power from the main shaft 20 to the transfer shaft 30, and a control unit 50 for the control of the transmission power of the rotation transmitting mechanism 40.

The main shaft 20 has at its one end a connection 20a to be connected to the engine, and at its other end a connection 20b to be connected to the rear wheel R side.

The transfer shaft 30 is arranged parallel to the main shaft 20, and includes a connection 30a to be connected to the front wheel F side and a connection 30b to be connected to the rotation transmitting mechanism 40 side.

The rotation transmitting mechanism 40 comprises a casing 41 which rotates together with the main shaft 20, a shaft 42 which rotates together with the transfer shaft 30, a piston disk 43 coupled to the casing 41 in such a manner as to be axially displaceable, a plurality of pressure plates 44, 45 arranged within the piston disk 43 so as to axially alternately confront one another, a multiplicity of rollers 47 arranged between the pressure plates 44 and 45, a plurality of cages 48 for retaining the rollers 47 in a freely rolling manner, and a pressing mechanism 49 for pressing the piston disk 43 in the axial direction of the casing 41. In the rotation transmitting mechanism 40, the pressure plate 44 on one hand rotates together with the casing 41 whereas the pressure plate 45 on the other rotates together with the shaft 42, and in the same manner as the first embodiment, the cages 48 retain the rollers 47 in such a manner that the rolling axes of the rollers 47 are inclined by a predetermined angle relative to a plane containing the rotational axis of the casing 1. The shaft 42 has a connection 42a to be connected to the transfer shaft 30, and is rotatably mounted on the main shaft 20. Arrangement is such that the connection 42a of the shaft 42 is coupled via a chain 42b to a connection 30b of the transfer shaft 30, to allow the shaft 42 and the transfer shaft 30 to rotate together. The pressing mechanism 49 comprises a support plate 49a for rotatably supporting the piston disk 43, a lever 49b for pressing the support plate 49a toward the piston disk 43, a pin 49c for pivotally supporting one end of the lever 49b, a rod 49d having one end connected to the other end of the lever 49b, a piston 49e connected to the other end of the rod 49d, and a cylinder 49f for imparting a sliding motion to the piston 49e which is driven by a hydraulic pressure within the cylinder 49f. Thus, when the hydraulic pressure within the cylinder 49f is raised by a hydraulic pump not shown, the piston 49e slides to allow the piston disk 43 to be pressed toward the rollers 47 by means of the lever 49b.

The control unit 50 is comprised of a microcomputer which is connected to the hydraulic pump for driving the piston 49e. The control unit 50 receives information on the state of travel of the automobile from a sensor for detecting the velocities of the wheels and from a sensor for detecting acceleration in the longitudinal and transverse direction of the automobile, based on which information the pressing force of the pressing mechanism 49 is controlled.

In the thus constructed transfer, when the main shaft 20 is rotated by a driving force from the engine, the driving force is transmitted via the main shaft 20 to the rear wheels R. At that time, when the pressure plates 44, 45 are pressed by the pressing mechanism 49 of the rotation transmitting mechanism 40, there is generated in the same manner as the first embodiment a frictional force corresponding to the pressing force by the rollers 7, the frictional force serving to transmit the power of the main shaft 20 from the casing 1 via the shaft 42 to the transfer shaft 30. That is, when the pressing against the rollers 47 by the pressing mechanism 49 is released in the rotation transmitting mechanism 40, the power of the main shaft 20 is by no means transmitted to the transfer shaft 30, resulting in a two-wheel drive in the driving line of Fig. 15, whereas when the power of the main shaft 20 is transmitted to the transfer shaft 30 by virtue of the rotation transmitting mechanism 40, four-wheel drive is achieved. In this instance, by controlling the power transmitting force of the rotation transmitting mechanism 40 by means of the control unit 50, it is possible to optionally vary the driving torque distribution ratios to be imparted to the front and rear wheels, in response to the information on the state of travel received by the control unit 50, thus ensuring at all times a proper torque distribution to the wheels upon acceleration, deceleration, or turning.

In this manner, according to the present invention, the rotation transmitting mechanism 40 whose power transmission force is controlled by the control unit 50 is used in the automobile transfer, so that similar to the first embodiment it is possible to constantly and stably transmit a power and therefore to improve the performance of the power distributor.

Although the above embodiment has been of a type making use of hydraulic pressure to drive the pressing mechanism 49 of the rotation transmitting mechanism 40, it would also be possible to employ other driving means such as a pressure generating mechanism comprised of for example an electromagnetic clutch and various hydraulic pumps. Furthermore, although in the above embodiment the engine driving force has always been transmitted via the main shaft 20 to the rear wheel R side, but optionally via the transfer shaft 30 to the front wheel F side, it would also be possible to arrange reversely, that is, in such a manner that the power from the main shaft 20 is transmitted to the front wheel F side but the power associated with the transfer shaft 30 to the rear wheel R side.

## Claims

1. A rotation transmitting mechanism having a pair of rotary elements arranged coaxially with each other, a movable member engaged with one rotary element in an axially displaceable manner and rotating together with said one rotary element, pressing means for pressing said movable member toward its one end in the axial direction, and rotational force transmission means for transmitting rotational forces of said rotary elements by use of pressing force of said pressing means, the improvement wherein
said rotational force transmission means comprise a rotational member which rotates together with said one rotary element, a rotational member which rotates together with the other rotary element, a plurality of rollers arranged spaced apart from one another in the circumferential direction of the rotary elements between axially confronting surfaces of said rotational members, said plurality of rollers being allowed, when a rotational difference occurs between said rotary elements, to roll while being in contact with said axially confronting surfaces of said rotational members, and a roller retainer for retaining said rollers in such a manner that the rolling axes of said rollers are inclined so as to form a predetermined angle relative to a plane containing rotational axes of said rotary elements.

2. A rotation transmitting mechanism according to claim 1, wherein
said rollers are provided in a freely inclined manner so that a first angle is different from a second angle, said first angle being an angle formed, when a rotational difference of said rotary elements occurs in one rotational direction, between the rolling axes of said rollers and a plane containing the rotational axes of said rotary elements, said second angle being an angle formed, when said rotary elements generate a rotational difference in the other rotational direction, between the rolling axes of said rollers and a plane containing the rotational axes of said rotary elements.

3. A rotation transmitting mechanism according to claim 1 or 2, wherein
said pressing means comprise a viscous fluid arranged on the other end of said movable member, and a pressing member for imparting to said viscous fluid a pressure in the axial direction of said movable member by a rotational force of said one rotary element.

4. A rotation transmitting mechanism according to claim 1 or 2, wherein
said pressing means comprise a pressing member arranged on the other end side of said movable member, driving means capable of displacing said pressing member in the axial direction of said movable member, and control means for optionally varying the pressing force imparted by said drive means to said movable member.

5. A rotation transmitting mechanism according to any one of the preceding claims, wherein
said roller retainer has a hole for receiving a plurality of rollers.

6. A transfer for automobiles comprising a rotation transmitting mechanism having a pair of rotary elements arranged coaxially with each other, a movable member engaged with one rotary element in an axially displaceable manner and rotating together with said one rotary element, pressing means for pressing said movable member toward its one end in the axial direction, and rotational force transmission means for transmitting rotational forces of said rotary elements by use of pressing force of said pressing means, said rotary elements being coupled respectively to a drive shaft associated with the front wheels and to a drive shaft associated with the rear wheels, said rotation transmitting mechanism intervening to transmit a driving force of the front wheel side to the rear wheel side, or to transmit a driving force of the rear wheel side to the front wheel side, the improvement wherein
said rotational force transmission means comprise a rotational member which rotates together with said one rotary element, a rotational member which rotates together with the other rotary element, a plurality of rollers arranged spaced apart from one another in the circumferential direction of the rotary elements between axially confronting surfaces of said rotational members, said plurality of rollers being allowed, when a rotational difference occurs between said rotary elements, to roll while being in contact with said axially confronting surfaces of said rotational members, and a roller retainer for retaining said rollers in such a manner that the rolling axes of said rollers are inclined so as to form a predetermined angle relative to a plane containing rotational axes of said rotary elements.
